# EUROPEAN PATENT APPLICATION

(11) **EP 4 613 234 A1**
(43) Date of publication of application: **10.09.2025**
(21) Application number: 23885938.3
(22) Date of filing: 30.06.2023
(51) Int. Cl.: A61C 8/00, A61C 5/70

(54) **DENTAL IMPLANT STRUCTURE**

(30) Priority: 31.10.2022 KR 20220142317
(71) Applicant: Innoden Co., Ltd., Siheung-si, Gyeonggi-do 15057 (KR)
(72) Inventor: JANG, Cheon Seok, Ansan-si Gyeonggi-do 15484 (KR)
(74) Representative: Hautier IP - MC/EP
(86) International application number: PCT/KR2023/009200
(87) International publication number: WO 2024/096241

(57) **Abstract**

The present disclosure relates to a dental implant structure having a separable abutment screw, the structure fastening and fixing, through an abutment screw, an abutment to a fixture implanted in the alveolar bone, and, more specifically, to a dental implant structure provided such that a head portion of an abutment screw is not accommodated in an abutment and protrudes from the top of an abutment post so that the diameter (inner diameter) of an inner space of the abutment can be reduced, and thus the diameter and thickness of the abutment post can be freely formed in a desired size.

## Description

### [Technical Field]

The present disclosure relates to a dental implant structure having a separable abutment screw, the structure fastening and fixing, through an abutment screw, an abutment to a fixture implanted in an alveolar bone, and, more specifically, to a dental implant structure provided such that a head portion of an abutment screw is not accommodated in the abutment and protrudes from the top of a post of the abutment so that a diameter (inner diameter) of an inner space of the abutment can be reduced, and thus a diameter and thickness of the abutment post can be freely formed in a desired size.

### [Background Art]

A dental implant structure basically includes a fixture that is implanted into an alveolar bone, an abutment (support pole) that is fixed to the fixture and supports lateral or horizontal pressure in response to an occlusal force applied during mastication, and a crown (artificial tooth) that covers and restores the upper portion of the abutment to restore aesthetic beauty similar to natural teeth.

The abutment is fastened and fixed to the fixture via an abutment screw. Depending on the structure in which the abutment screw is coupled to the abutment, it can be broadly classified into an abutment screw-integrated abutment and an abutment screw-separated abutment. The abutment screw-integrated abutment has the abutment screw formed integrally with the abutment, while an abutment screw-separated abutment has the abutment screw separated from the abutment.

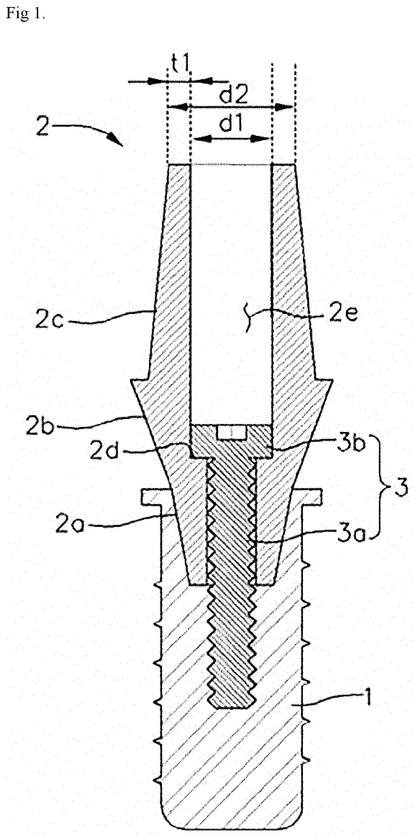

FIG. 1 is a cross-sectional view schematically illustrating a conventional abutment screw-separated abutment.

As illustrated in FIG. 1, a conventional abutment screw-separated abutment 2 is fastened and fixed to a fixture 1 via an abutment screw 3. The abutment screw 3 includes a screw portion 3a that is screw-connected to the fixture 1 and a head portion 3b that is formed with a diameter larger than the diameter of the screw portion 3a and is locked downward to an inner jaw portion 2d formed on the inner side of the abutment 2.

Since the head portion 3b of the abutment screw 3 of the conventional abutment screw-separated abutment 2 is structured such that the head portion is accommodated inside the abutment 2, it becomes an obstacle to forming the diameter or thickness of the abutment 2 to the target diameter or thickness. That is, since the head portion 3b of the abutment screw 3 is formed to have a larger diameter than the screw portion 3a, the diameter (inner diameter) of an inner space 2e of the abutment 2 in which the head portion 3b is accommodated should also be formed to be larger than the diameter of the head portion 3b according to the diameter of the head portion 3b, making it difficult to form a post 2c of the abutment 2 to the target diameter or thickness.

Normally, the diameter (outer diameter) of the screw portion 3a of the abutment screw 3 is formed to be approximately 2.0 mm (standard screw diameter), and the head portion 3b is formed to be approximately 2.3 to 2.4 mm, which is approximately 0.3 to 0.4 mm larger than the diameter of the screw portion 3a. Accordingly, the uppermost diameter d2 of the abutment 2 should be at least approximately 0.5 mm larger than the diameter d1 of the head portion 3b of the abutment screw 3. Accordingly, the uppermost diameter d2 of the post 2c of the abutment 2 should be at least 2.8 mm, as illustrated in FIG. 1 (the sum of a diameter d1 of the head portion 3b of the abutment screw 3, which is 2.4 mm, and a thickness t1 of the metal material forming the abutment 2, which is 0.4 mm (0.2 mm × 2).

In this way, in the abutment screw-separated abutment structure in which the head portion 3b of the abutment screw 3 is accommodated inside, the diameter d2 of the post 2c of the abutment 2 should be at least 2.8 mm. This makes it difficult to apply an abutment having this structure to the mandibular anterior teeth. The mandibular anterior teeth are areas where the diameter of the teeth is relatively small, and in order to make the mandibular teeth look natural, the diameter d2 of the post 2c of the abutment 2 is often required to be 2.8 mm or less. However, for the reasons described above, there are many cases in which this cannot be solved with the conventional abutment structure. In addition, when the diameter of the post 2c is reduced, the outer wall angle of the post approaches 90°, which may cause difficulty in the passing of the crown.

### [Prior art literature]

### [Patent literature]

(Patent literature 1) KR 10-2017-0102280 A (September 8, 2017)
(Patent literature 2) KR 20-0467684 Y1 (June 21, 2013)
(Patent literature 3) KR 10-1210671 B1 (December 4, 2012)

### [Disclosure]

### [Technical Problem]

As described above, since the inner space 2e must be provided in the center of the abutment to accommodate the head portion 3b of the abutment screw 3, the thickness (thickness from the outer surface to the inner surface) of the post 2c of the abutment 2 cannot but be formed smaller. In addition, in the case of the abutment 2 applied to a patient with a small tooth width, the cuff 2b is formed with a relatively small diameter, and the lower portion of the post 2c in contact with the top surface of the cuff 2b also cannot but be formed smaller according to the diameter of the small cuff 2b. In addition, in the case of a structure in which an elastic ring is coupled to the outer surface of the post to absorb an occlusal force, such as in Korean Patent No. 10-2323728, the diameter of the post cannot but be formed smaller in consideration of the thickness of the elastic ring.

This makes it more difficult to form a coupling groove for coupling the elastic ring around the outer surface of the post 2c of the abutment. For example, when forming the coupling groove along the periphery of the outer surface of the post 2c of the abutment, an unnecessary hole (a hole through which the outside of the post and the inner space 2e communicate) may be formed on the side portion of the post 2c, or it may be difficult to apply the elastic ring to the abutment due to structural vulnerability caused by a decrease in thickness at the portion of the coupling groove.

Accordingly, the present disclosure is proposed to solve various problems of the related art, and a task (object) of the present disclosure is to provide a dental implant structure capable of overcoming structural limitations such as restrictions on the diameter or thickness of the post of the abutment by reducing the diameter of the inner space of the abutment in an abutment screw-separated abutment structure.

In addition, another object of the present disclosure is to provide a dental implant structure that may stably form a coupling groove to which the elastic ring for coupling the crown and the abutment is to be coupled while buffering occlusal force applied during repetitive mastication between the crown and the abutment without affecting the diameter and thickness of the post of the abutment.

In addition, the present disclosure is not limited to the above-described objects, and various other objects may be additionally provided through the techniques described in the embodiments and claims described below.

### [Technical Solution]

In order to achieve the objects, according to one embodiment of the present disclosure, there is provided a dental implant structure having a separatable abutment screw in which an abutment is fastened and fixed to a fixture implanted into an alveolar bone through an abutment screw, in which the abutment screw includes a screw portion coupled to the fixture through an inner space of the abutment, a connection portion formed above the screw portion and locked downward to the abutment, and a head portion formed above the connection portion and protruding above the abutment.

In addition, a diameter of the head portion may decrease from a bottom to a top.

Moreover, a driver hole may be formed in the head portion.

Additionally, a vertical cut surface may be formed on a side surface of the head portion.

Furthermore, a coupling groove to which an elastic ring is coupled may be formed around the head portion.

Moreover, the elastic ring in the form of a C-ring or O-ring may be coupled to the coupling groove.

Additionally, the connection portion may be accommodated in the inner space of the abutment.

In addition, a locking jaw portion which is downward locked to an inner jaw portion formed in the inner space of the abutment may be formed at a boundary between the screw portion and the connection portion.

Furthermore, the connection portion may be formed with a tapered structure in which a diameter increases toward the top.

In addition, the dental implant structure may further include a crown installed to cover the head portion and a post of the abutment, and an accommodation groove may be formed in the crown to accommodate the head portion and the post of the abutment.

Additionally, an elastic body may be installed between the accommodation groove and a crown accommodation portion including the head portion and the post of the abutment accommodated inside the accommodation groove.

Moreover, the dental implant structure may further include an abutment cap coupled to the head portion and accommodated in the accommodation groove.

In addition, the abutment cap may include a screw portion of the abutment cap that is screw-connected to the head portion of the abutment screw, and a head portion of the abutment cap that is formed above the screw portion of the abutment cap and presses an inner wall of the accommodation groove toward a side of the abutment.

### [Advantageous Effects]

As described above, according to the dental implant structure according to the present disclosure, a new dental implant structure is provided in which the head portion of the abutment screw is not accommodated in the abutment but protrudes above the post of the abutment, thereby effectively reducing the diameter (inner diameter) of the inner space of the abutment, and thereby freely forming the abutment into a desired size without limitations on the diameter and thickness of the post of the abutment.

In addition, according to the dental implant structure according to the present disclosure, a new dental implant structure is provided in which the coupling groove is formed in the head portion of the abutment screw protruding upward from the post of the abutment, and the elastic ring is coupled to the coupling groove, thereby stably coupling the crown and the abutment without using an adhesive and without affecting the diameter and thickness of the post of the abutment at all. Furthermore, the elastic ring enables the crown to be smoothly and stably attached or detached, and absorbs repeatedly applied occlusal force, thereby preventing the abutment and/or fixture from being broken.

In addition, according to the dental implant structure according to the present disclosure, the elastic body is formed between the accommodation groove formed in the crown and the crown accommodation portion (a portion including the head portion of the abutment screw and the abutment post) accommodated into the accommodation groove of the crown, thereby preventing the crown from directly contacting the crown accommodation portion. Therefore, it is possible to secure a free space between the crown and the crown accommodation portion in which smooth contraction and expansion of the elastic ring can occur, and by utilizing elasticity together with the elastic ring, the occlusal force repeatedly applied to the crown is absorbed. Accordingly, it is possible to prevent fracture of the crown, abutment, and/or fixture, or the like due to repeated occlusal force, and prevent foreign substances from entering between the crown and the abutment.

### [Description of Drawings]

FIG. 1 is a cross-sectional view illustrating a conventional abutment screw-separated abutment.
FIG. 2 is a cross-sectional view illustrating an assembled dental implant structure according to a first embodiment of the present disclosure.
FIG. 3 is a cross-sectional view illustrating a state where an adjustment screw is separated from the dental implant structure illustrated in FIG. 2.
FIG. 4 are cross-sectional views illustrating a comparison between the first embodiment of the present disclosure and Comparative Example 1.
FIG. 5 is a cross-sectional view illustrating an assembled dental implant structure according to a second embodiment of the present disclosure.
FIG. 6 is a cross-sectional view illustrating a state where an adjustment screw is separated from the dental implant structure illustrated in FIG. 5.
FIG. 7 is a cross-sectional view illustrating an assembled dental implant structure according to a third embodiment of the present disclosure.
FIG. 8 are cross-sectional views illustrating a comparison between the third embodiment of the present disclosure and Comparative Example 2.
FIG. 9 is a cross-sectional view illustrating an assembled dental implant structure according to a fourth embodiment of the present disclosure.
FIG. 10 is a cross-sectional view illustrating a state wherein a crown is coupled in FIG. 9.
FIG. 11 is a cross-sectional view illustrating a dental implant structure according to a fifth embodiment of the present disclosure.
FIG. 12 is a cross-sectional view illustrating a dental implant structure according to a sixth embodiment of the present disclosure.

### [Best Mode]

Hereinafter, the advantages and features of the present disclosure and the methods for achieving them will be clarified by referring to the embodiments described in detail below together with the accompanying drawings. In addition, the same reference numerals refer to the same components throughout the present specification. In addition, the sizes and shapes of the components illustrated in each drawing may be excessively illustrated for convenience of explanation and are not intended to be limiting. In addition, when it is described as "A and/or B", it may mean both A and B, or it may mean either A or B.

In order to achieve the aforementioned problems (objects), the present disclosure provides a new dental implant structure in which a head portion of an abutment screw is not accommodated inside the abutment but protrudes upward from a post of the abutment. That is, the dental implant structure according to the present disclosure allows the head portion of the abutment screw to protrude above the post of the abutment, thereby reducing the diameter (inner diameter) of the inner space of the abutment, and thereby freely forming the diameter and thickness of the post of the abutment to a desired size.

Hereinafter, embodiments of the present disclosure will be described in detail with reference to the attached drawings.

### First Embodiment

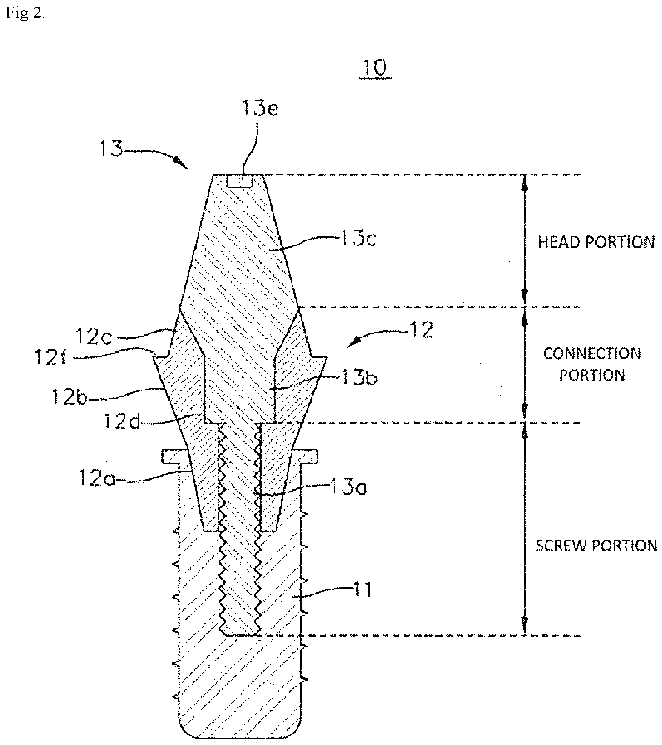

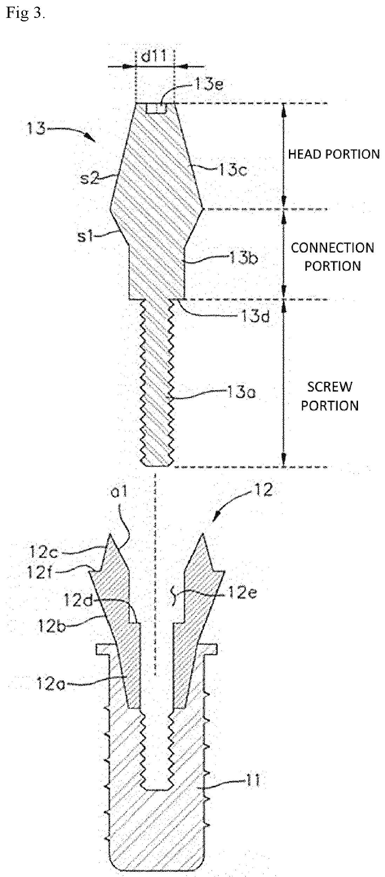

FIG. 2 is a cross-sectional view schematically illustrating an assembled dental implant structure according to a first embodiment of the present disclosure, and FIG. 3 is a cross-sectional view illustrating a state where an adjustment screw is separated from the dental implant structure illustrated in FIG. 2. Here, a crown is omitted for convenience of explanation.

Referring to FIGS. 2 and 3, a dental implant structure 10 according to the first embodiment of the present disclosure includes an abutment screw 13 that is penetrated and coupled through an inner space (hollow portion) 12e of an abutment 12 and has an upper portion that protrudes above a post 12c of the abutment 12.

The abutment screw 13 includes, as illustrated in FIG. 3, a screw portion 13a that is screw-connected to a fixture 11 implanted into an alveolar bone, a connection portion 13b formed above the screw portion 13a and accommodated within the inner space 12e of the abutment 12, and a head portion 13c formed above the connection portion 13b so as to protrude above the post 12c of the abutment 12, as illustrated in FIG. 2.

At the boundary between the screw portion 13a and the connection portion 13b, a locking jaw portion 13d locked downward to an inner jaw portion 12d of the abutment 12 is formed. The connection portion 13b may have a lower outer surface that is connected to the screw portion 13a as a vertical surface, and an upper portion of the connection portion 13b connected to the head portion 13c may have a tapered structure with an outer surface having an inclined surface so that the diameter increases.

Meanwhile, when the inner jaw portion 12d of the abutment 12 is not formed and the function of the locking portion is performed by a tapered portion a1, the locking jaw portion 13d of the abutment screw 13 may be omitted. In this case, a tapered surface s1 of the abutment screw 13 inserted into the inner side of the post 12c of the abutment 12 is in contact with the tapered portion a1 of the abutment 12 and locked thereto.

The head portion 13c, as illustrated in FIG. 2, is a portion which is formed to protrude above the post 12c of the abutment 12 and is accommodated inside the crown (not illustrated) together with the post 12c of the abutment 12. Since the head portion 13c has a tapered structure with an outer surface having an inclined surface so that the diameter becomes smaller from the bottom to the top, the head portion 13c may be stably accommodated in the crown. In addition, a driver hole 13e into which a driver tool is inserted may be formed at the upper end portion of the head portion 13c.

As illustrated in FIG. 3, the abutment 12 includes a coupling portion 12a that is coupled to the fixture 11, a cuff 12b that is formed above the coupling portion 12a and has a tapered structure with an outer surface having an inclined surface so that the diameter increases, and the post 12c that is formed above the cuff 12b and has a tapered structure with an outer surface having an inclined surface so that the diameter decreases and is accommodated in the crown. An outer jaw portion 12f that has a step is formed at the boundary between the cuff 12b and the post 12c.

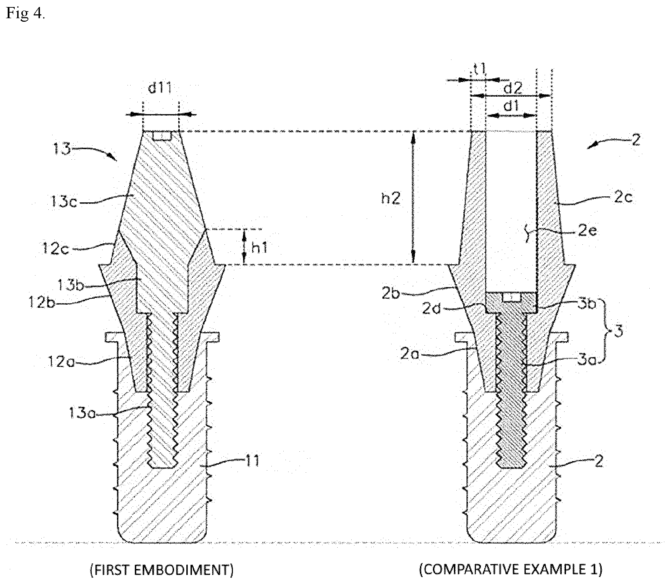

FIG. 4 are schematic cross-sectional views illustrating a comparison between the first embodiment of the present disclosure with Comparative Example 1. Here, Comparative Example 1 has the same structure as the example of the prior art illustrated in FIG. 1.

Referring to FIG. 4, in the first embodiment of the present disclosure, a height h1 of the post 12c of the abutment 12 is formed to be shorter than the height h2 of the post 2c of the abutment 2 according to Comparative Example 1.

In the first embodiment of the present disclosure, the head portion 13c of the abutment screw 13 is formed to protrude upward from the post 12c of the abutment 12, thereby partially replacing the role (coupling with the crown) performed by the post 2c of the abutment 2 in a conventional implant structure such as Comparative Example 1. Through this, the implant structure can be freely formed without being restricted by the diameter or thickness t1 of the post inner space 2e of the abutment 2, which is a problem in the conventional implant structure.

In addition, in the implant structure such as Comparative Example 1, since the inner space 2e in which the head portion 3b of the abutment screw 3 is accommodated is necessarily formed inside the abutment 2, the thickness t1 of the post 2c of the abutment 2 should decrease by the diameter of the inner space 2e, and as a result, the strength is weakened and there is a high risk of fracture. However, in the first embodiment of the present disclosure, since the abutment screw 13 is formed in a structure without a hollow cavity, an upper diameter d11 is thicker than the thickness t1 of the post 2c of Comparative Example 1, thereby improving the strength.

### Second Embodiment

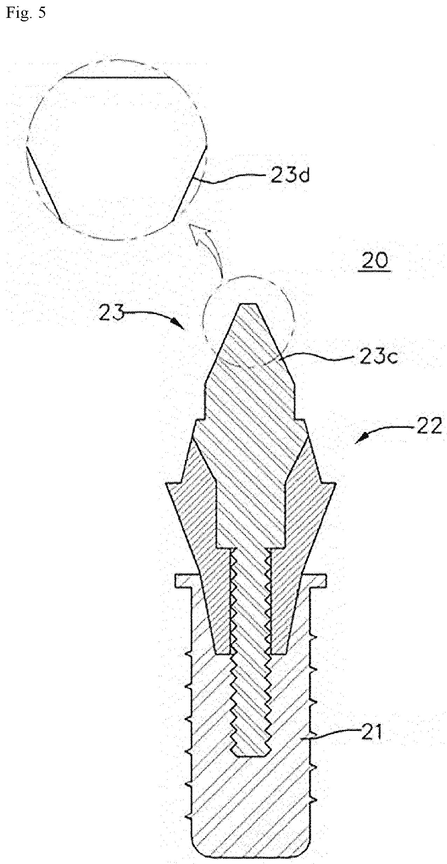

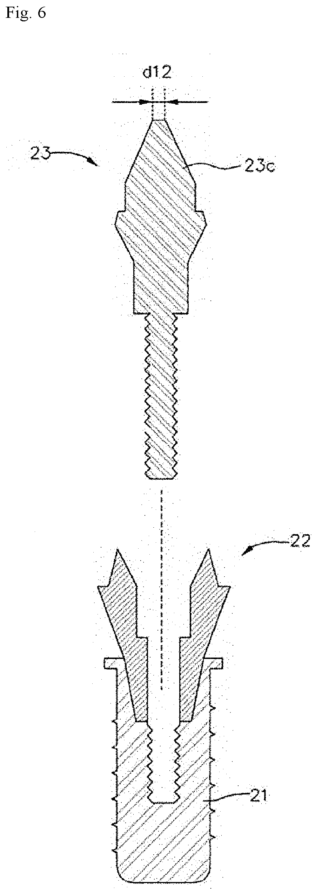

FIG. 5 is a cross-sectional view schematically illustrating an assembled dental implant structure according to a second embodiment of the present disclosure, and FIG. 6 is a cross-sectional view illustrating a state where an adjustment screw is separated from the dental implant structure illustrated in FIG. 5. Here, the crown is omitted for convenience of explanation.

Referring to FIGS. 5 and 6, a dental implant structure 20 according to the second embodiment of the present disclosure includes a fixture 21, an abutment 22, and an abutment screw 23, similarly to the first embodiment. However, in the second embodiment, a diameter d12 of a head portion 23c of the abutment screw 23 accommodated inside the crown is formed smaller than in the first embodiment.

In the second embodiment, instead of forming a driver hole in the head portion 23c of the abutment screw 23, a vertical cut surface 23d (refer to the inside of a circle) is formed on the outer surface of the head portion 23c to tighten or loosen the abutment screw 23 using a tool such as a ratchet. Therefore, in the second embodiment, by forming the vertical cut surface 23d on the outer surface of the head portion 23c of the abutment screw 23 instead of the driver hole, the diameter d12 of the head portion 23c of the abutment screw 23 may be formed smaller than the diameter d11 of the head portion 13c of the abutment screw 13 according to the first embodiment.

### Third Embodiment

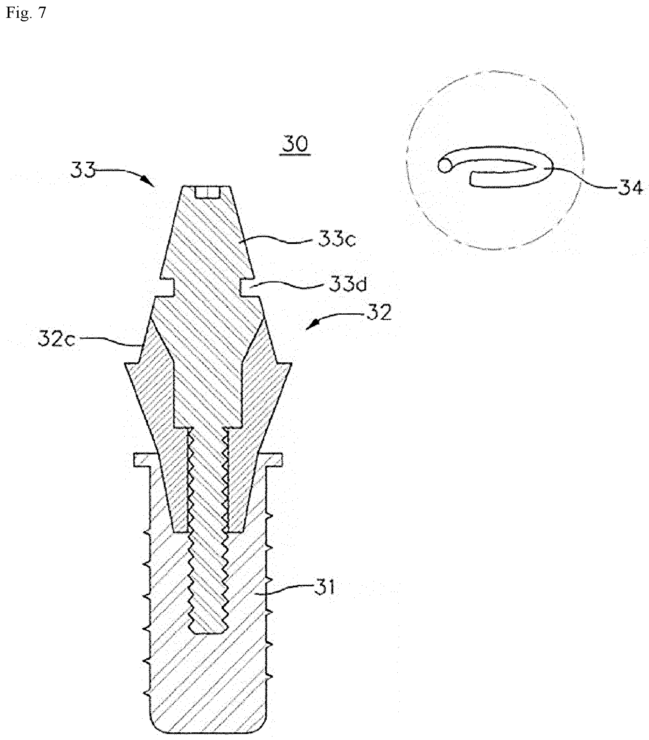

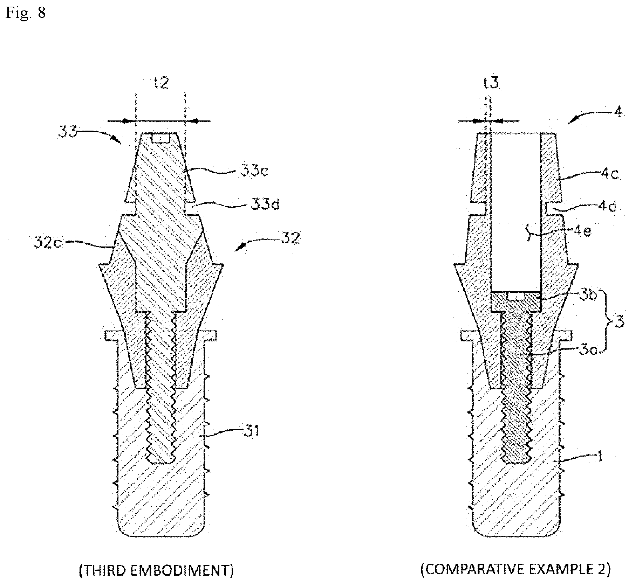

FIG. 7 is a cross-sectional view schematically illustrating an assembled dental implant structure according to a third embodiment of the present disclosure, and FIG. 8 are cross-sectional views schematically illustrating a comparison between the third embodiment of the present disclosure and Comparative Example 2. Here, the crown is omitted for convenience of explanation.

Referring to FIG. 7, a dental implant structure 30 according to the third embodiment of the present disclosure includes a fixture 31, an abutment 32, and an abutment screw 33, similarly to the first embodiment. However, in the third embodiment, a coupling groove 33d is formed in a belt shape around the head portion 33c of the abutment screw 33, and an elastic member having a ring structure, that is, an elastic ring 34 (refer to the inside of a circle) is coupled to the coupling groove 33d. In this case, one or two or more coupling grooves 33d may be formed.

The elastic ring 34 may be formed as a C-ring or O-ring structure, and when the elastic ring 34 is formed as an O-ring structure, the elastic ring 34 may be formed as a ring woven with silicone rubber material, synthetic rubber material, or thin nitinol wire. Moreover, when the elastic ring 34 is formed as a C-ring structure, a metal film such as nitinol or plastic may be used. This elastic ring 34 buffers the impact caused by the occlusal force applied to the crown during mastication between the crown and the post 32c of the abutment and the head portion 33c of the abutment screw 33, while allowing the crown to be coupled to the abutment 32 and the abutment screw 33 without using an adhesive, and prevents unwanted fall-off of the crown.

In addition, in an implant structure such as Comparative Example 2, since an inner space 4e is formed inside the abutment 4 to accommodate the head portion 3b of the abutment screw 3, the thickness of the post 4c of the abutment 4 decreases by the diameter of the inner space 4e. Moreover, when a coupling groove 4d is additionally formed here, a thickness t3 of the post 4c of the abutment 4 decreases further at the portion where the coupling groove 4d is formed, so that a hole may be formed during the process for forming the coupling groove 4d and a problem may occur in which the hole is communicated with the inner space 4e. However, in the third embodiment, since a hollow portion is not formed in the head portion 33c of the abutment screw 33, a sufficient thickness t2 is secured, and thus the problem in the implant structure such as Comparative Example 2 does not occur.

That is, as illustrated in FIG. 8, in Comparative Example 2, the inner space 4e is formed in the abutment 4, but in the third embodiment, no empty space is formed in the head portion 33c of the abutment screw 33 that protrudes outward from the post 32c of the abutment 32. Accordingly, even when the coupling groove 33d is formed around the head portion 33c of the abutment screw 33, no structural problem occurs due to the thickness of the head portion 33c of the abutment screw 33.

When manufacturing the crown, a peripheral groove (not illustrated) may be formed on the inner periphery of the crown corresponding to the elastic ring 34, into which a part of the elastic ring 34 is inserted. When the crown is seated on the post 32c of the abutment 32, the elastic ring 34 is horizontally coupled to the peripheral groove formed inside the crown and the coupling groove 33d formed in the head portion 33c of the abutment screw 33. Through this, the crown may be fixed to the abutment 32 without using an adhesive.

Meanwhile, when the crown is seated, the post 32c of the abutment 32 and the head portion 33c of the abutment screw 33 are accommodated in the inner accommodation groove of the crown. Hereinafter, for convenience of explanation, the post 32c of the abutment 32 and the head portion 33c of the abutment screw 33 accommodated inside the accommodation groove formed inside the crown are collectively referred to as a "crown accommodation portion". An elastic body (not illustrated) having elasticity may be inserted between the crown accommodation portion and the accommodation groove of the crown to manufacture a crown that moves in response to the occlusal force. In this case, the elastic body may be coated or adhered to the outer surface of the crown accommodation portion. Alternatively, the elastic body may be coated or adhered to the inner wall of the accommodation groove of the crown. Alternatively, the elastic body may be formed thinly as an independent product and inserted between the crown accommodation portion and the crown accommodation groove.

### Fourth Embodiment

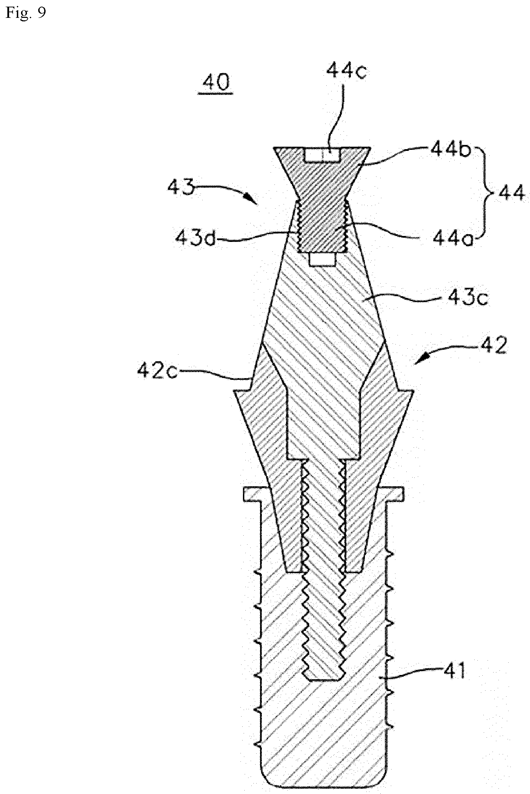

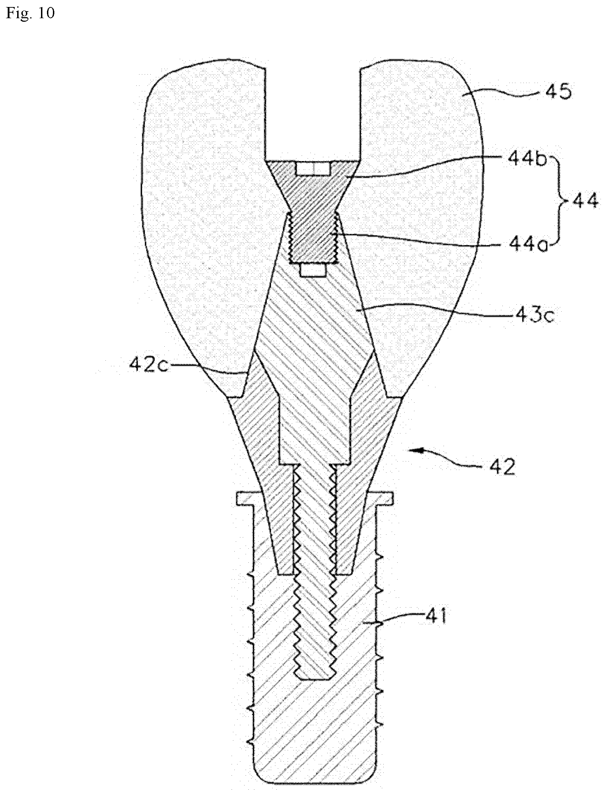

FIG. 9 is a cross-sectional view schematically illustrating an assembled dental implant structure according to a fourth embodiment of the present disclosure, and FIG. 10 is a cross-sectional view schematically illustrating a state wherein a crown is coupled in FIG. 9.

Referring to FIGS. 9 and 10, a dental implant structure 40 according to the fourth embodiment of the present disclosure includes a fixture 41, an abutment 42, and an abutment screw 43, similarly to the first embodiment. In addition, in order to more stably tightly fix a crown 45 to a post 42c of the abutment 42 and a head portion 43c of the abutment screw 43, the dental implant structure 40 includes an abutment cap 44 that is screw-coupled to the upper portion of the abutment screw 43.

The abutment cap 44 includes a screw portion 44a that is coupled to the head portion 43c of the abutment screw 43. The screw portion 44a is screw-coupled to a screw groove portion 43d of the head portion 43c of the abutment screw 43 through screw threads 141a formed on the outer surface. In addition, the abutment cap 44 includes a head portion 44b formed above the screw portion 44a. A driver hole 44c may be formed on the upper center of the head portion 44b to allow a driver tool to be coupled when assembling or disassembling the abutment cap 44 to the head portion 43c of the abutment screw 43. In this case, the driver hole 44c may be formed in, for example, a hexagon, a star, or a cross shape. Meanwhile, the head portion 44b of the abutment cap 44 may be formed as a tapered structure with an inclined surface whose diameter increases toward the top so that the outer surface corresponds to the inner surface of the crown 45 in order to tightly fix the crown 45, as illustrated in FIG. 10. Alternatively, the head portion 44b may be formed as a "T"-shaped structure.

### Fifth Embodiment

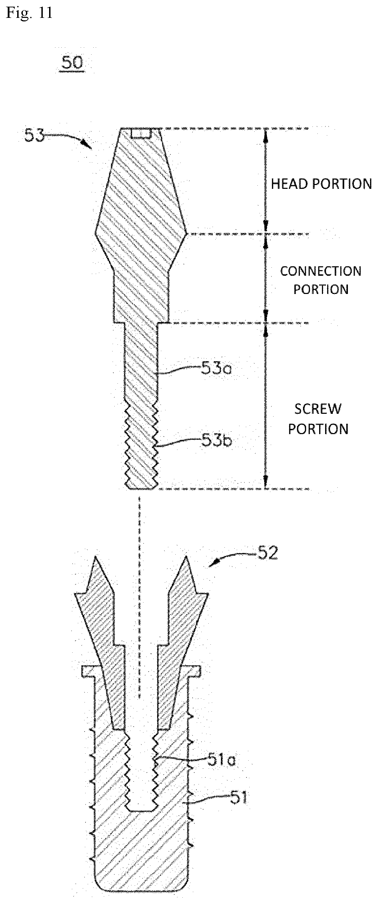

FIG. 11 is a cross-sectional view schematically illustrating a dental implant structure according to a fifth embodiment of the present disclosure and a view illustrating a state in which an abutment screw is separated from an abutment.

Referring to FIG. 11, a dental implant structure 50 according to the fifth embodiment of the present disclosure includes a fixture 51, an abutment 52, and an abutment screw 53, similarly to the first embodiment. However, unlike the first embodiment, in a screw portion 53a of the abutment screw 53, a screw thread 53b is not formed over the entire upper and lower portions of the screw portion 53a, but is formed only in the lower portion that is substantially screw-coupled to a screw thread 51a formed on the fixture 51.

### Sixth Embodiment

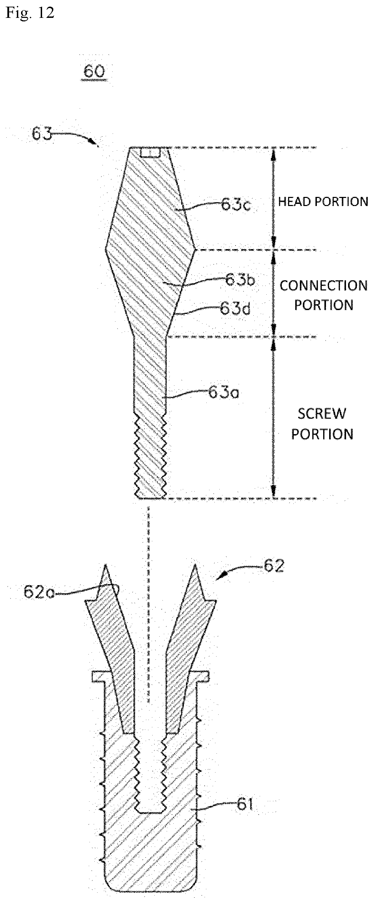

FIG. 12 is a cross-sectional view schematically illustrating a dental implant structure according to a sixth embodiment of the present disclosure and a view illustrating a state in which an abutment screw is separated from an abutment.

Referring to FIG. 12, a dental implant structure 60 according to the sixth embodiment of the present disclosure includes a fixture 61, an abutment 62, and an abutment screw 63, similarly to the fifth embodiment. However, unlike the fifth embodiment, an outer surface 63d of a connection portion 63b of the abutment screw 63 has a tapered structure having an inclined surface whose diameter increases as it approaches the head portion 63c. In addition, an inner surface 62a of the abutment 62, with which the outer surface 63d of the connection portion 63b comes into contact, also has a tapered structure having the same inclined surface as the inclined surface of the connection portion 63b.

Meanwhile, the abutment screws 13, 23, 33, 43, 53, and 63 proposed in the first to sixth embodiments of the present disclosure are configured such that the head portions 13c, 23c, 33c, 43c, 53c, and 63c have a structure in which the diameter thereof becomes smaller from the bottom to the top. That is, the head portions 13c, 23c, 33c, 43c, 53c, and 63c have a tapered structure in which the diameter thereof becomes smaller from the abutment side to the top. In addition, the head portions 13c, 23c, 33c, 43c, 53c, and 63c may have a cylindrical structure. Through this structure, the head portions 13c, 23c, 33c, 43c, 53c, and 63c may be easily accommodated in a crown.

As described above, although the preferred embodiments of the present disclosure have been described and illustrated using specific terms, such terms are only for the purpose of clearly describing the present disclosure. In addition, it is self-evident that various changes and modifications can be made to the embodiments of the present disclosure and the described terms without departing from the technical spirit and scope of the following claims. Such modified embodiments should not be understood individually from the spirit and scope of the present disclosure, but should be considered to fall within the claims of the present disclosure.

## Claims

1. A dental implant structure having a separatable abutment screw in which an abutment is fastened and fixed to a fixture implanted into an alveolar bone through an abutment screw,
wherein the abutment screw includes
a screw portion coupled to the fixture through an inner space of the abutment,
a connection portion formed above the screw portion and locked downward to the abutment, and
a head portion formed above the connection portion and protruding upward from the abutment,
the dental implant structure further includes a crown installed to cover the head portion and a post of the abutment,
an accommodation groove is formed in the crown to accommodate the head portion and the post of the abutment, and
the dental implant structure further includes an abutment cap coupled to the head portion and accommodated in the accommodation groove.

2. The dental implant structure of claim 1, wherein a diameter of the head portion decreases from a bottom to a top.

3. The dental implant structure of claim 1, wherein a driver hole is formed in the head portion.

4. The dental implant structure of claim 1, wherein a vertical cut surface is formed on a side surface of the head portion.

5. The dental implant structure of claim 1, wherein a coupling groove to which an elastic ring is coupled is formed around the head portion.

6. The dental implant structure of claim 5, wherein the elastic ring in a form of a C-ring or O-ring is coupled to the coupling groove.

7. The dental implant structure of claim 1, wherein the connection portion is accommodated in the inner space of the abutment.

8. The dental implant structure of claim 1, wherein a locking jaw portion which is downward locked to an inner jaw portion formed in the inner space of the abutment is formed at a boundary between the screw portion and the connection portion.

9. The dental implant structure of claim 1, wherein the connection portion is formed with a tapered structure in which a diameter increases toward the top.

10. The dental implant structure of claim 1, wherein an elastic body is installed between the accommodation groove and a crown accommodation portion including the head portion and the post of the abutment accommodated inside the accommodation groove.

11. The dental implant structure of claim 1, wherein the abutment cap includes
a screw portion of the abutment cap that is screw-connected to the head portion of the abutment screw, and
a head portion of the abutment cap that is formed above the screw portion of the abutment cap and presses an inner wall of the accommodation groove toward a side of the abutment.
